# FASCICULE DE BREVET EUROPEEN

(11) **EP 1 175 747 B1**
(45) Date de publication et mention de la délivrance du brevet: **23.12.2009**
(21) Numéro de dépôt: 00922692.9
(22) Date de dépôt: 13.04.2000
(51) Int. Cl.: H04J 3/16, H04Q 11/04

(54) **SYSTEME D'ACCES A UN RESEAU SYNCHRONE COMPRENANT UN EQUIPEMENT EMETTEUR ET UN EQUIPEMENT RECEPTEUR**
ZUGRIFFSSYSTEM FÜR EIN SYNCHRONES NETZ MIT EINER EMPFÄNGER EINRICHTUNG UND EINER SENDER EINRICHTUNG
SYSTEM FOR ACCESSING A SYNCHRONOUS NETWORK COMPRISING A TRANSMITTER EQUIPMENT AND A RECEIVER EQUIPMENT

(30) Priorité: 14.04.1999 FR 9904852
(43) Date de publication de la demande: 30.01.2002
(73) Titulaire: GULA CONSULTING Limited Liability Company, Dover, DC 19904 (US)
(72) Inventeur: LOUSSOUARN, Yann, F-22300 Lannion (FR); THIERRY, François, F-22700 Saint-Quay Perros (FR); CHATTER, Frédéric, F-22140 Tonquedec (FR); FOURNIER, Alain, F-22300 Lannion (FR)
(74) Mandataire: Vidon, Patrice
(86) Numéro de dépôt international: PCT/FR2000/000956
(87) Numéro de publication internationale: WO 2000/062451

(56) Documents cités:
- EP-A- 0 814 580
- EP-A- 0 901 306
- DUMORTIER P ET AL: "TRANSPORT OF GIGABIT ATM CELL STREAMS OVER LOWER ORDER SDH BACKBONE" PROCEEDINGS OF THE CONFERENCE ON COMPUTER COMMUNICATIONS (INFOCOM),US,LOS ALAMITOS, IEEE COMP. SOC. PRESS, page 1160-1167 XP000496577 ISBN: 0-8186-5572-0

## Description

La présente invention concerne un système d'accès à un réseau synchrone du type qui comprend un équipement émetteur et un équipement récepteur.

La présente invention s'applique à tout type de transport par multiplexage synchrone dont les deux principaux types actuellement connus sont la hiérarchie numérique synchrone dite SDH (Synchronous Digital Hierarchy) et la hiérarchie américaine dite SONET (Synchronous Optical NETwork).

Bien que l'invention soit décrite en relation avec la première de ces hiérarchies, on comprendra qu'elle peut s'appliquer à la seconde dont les principes fondamentaux sont équivalents sinon identiques.

On rappelle ci-dessous les caractéristiques définies dans la Recommandation UIT-T G.707 relative à la hiérarchie numérique synchrone dite SDH (Synchronous Digital Hierarchy) qui sont nécessaires à la compréhension de la présente description.

Cette Recommandation G.707 définit une trame de base à 155,520 Mbits/s appelée STM-1 (Synchronous Transport Module level 1). Elle définit également des conteneurs dans chacun desquels sont incluses les données à transmettre ainsi qu'un sur-débit dit POH (Path Overhead) pour former ce qui est nommé un conteneur virtuel VC. Différents types de conteneurs virtuels sont prévus selon leur capacité et donc le débit qu'ils permettent d'obtenir. Ainsi, le conteneur virtuel VC4 permet un débit d'environ 150 Mbits/s, le conteneur virtuel VC3 un débit d'environ 48 Mbits/s, le VC2 un débit d'environ 7 Mbits/s et le VC12 un débit d'environ 2 Mbits/s.

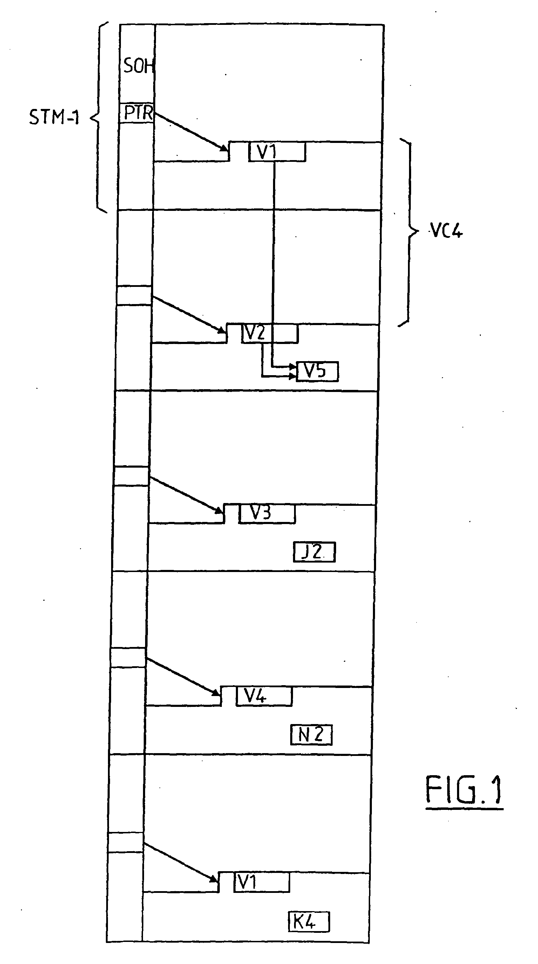

A la Fig. 1, on voit quatre trames de base STM-1 successives qui forment entre elles ce qui est nommée dans la suite de la présente description une multitrame. Chaque trame de base, de durée égale à 125 µs, est organisée en 9 lignes de 270 octets. Elle se compose d'un sur-débit de section SOH (Section OverHead), d'un pointeur PTR et d'une charge utile.

La charge utile est constituée d'un conteneur virtuel VC4 dont la position dans la trame STM-1 est définie par le pointeur PTR. La valeur de ce pointeur PTR peut être modifiée lorsque le débit de trame est décalé en plus ou en moins par rapport au débit du conteneur virtuel VC4. Des mécanismes de justifications positive ou négative sont également prévus pour tenir compte également de ces décalages de fréquences.

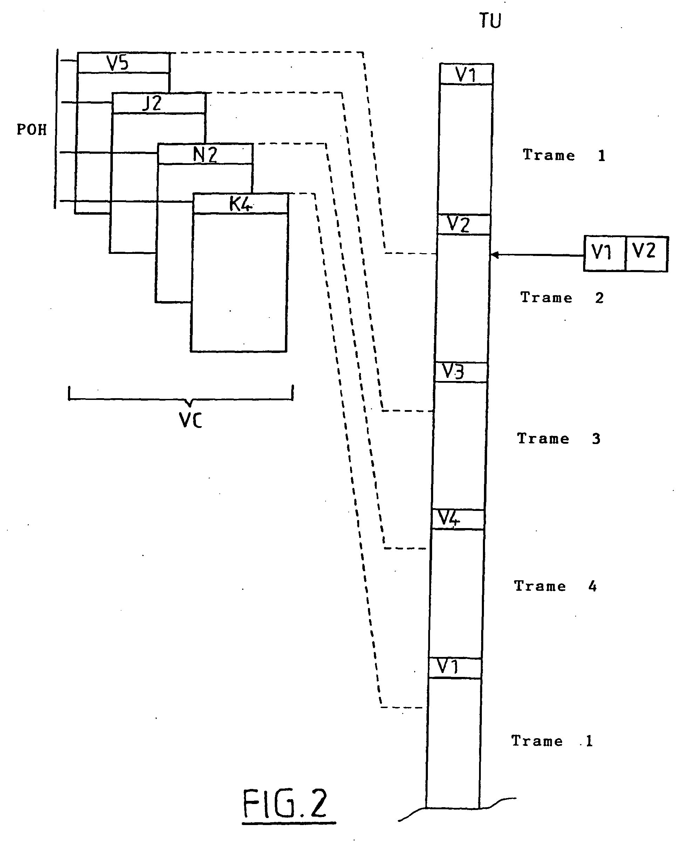

A la Fig. 2, on voit un conteneur virtuel VC qui peut être du type VC12 ou VC2 et qui est constitué, réparties sur quatre trames de base STM-1, de quatre parties de taille identique, possédant chacune un octet d'en-tête (référence dans la norme V5, J2, N2 ou K4) et une charge disponible pour l'usager.

Dans la suite de la description, on nommera chacune de ces parties, un sous-conteneur virtuel équivalent à un ¼ de conteneur virtuel qui sera donc soit un sous-conteneur virtuel de VC12, soit un sous-conteneur virtuel de VC2.

La taille d'un sous-conteneur virtuel est soit de 35 octets s'il s'agit d'un sous-conteneur de VC12, soit de 107 octets s'il s'agit d'un sous-conteneur de VC2. Chaque sous-conteneur virtuel possède un octet d'en-tête (V5, J2, N2 ou K4) et donc 34 ou 106 octets de charge utile. L'ensemble des octets d'en-tête constitue le sur-débit de conduit POH (Path overhead) du conteneur virtuel correspondant.

Les fonctions respectives de ces octets de sur-débit sont décrites dans la Recommandation G707. On notera juste que l'octet J2 sert normalement à transmettre périodiquement un identificateur de point d'accès à un conduit de niveau inférieur. Cet identificateur de point d'accès de conduit est défini par un message sur 16 octets.

On notera qu'une multitrame peut contenir jusqu'à 63 conteneurs virtuels VC12 ou jusqu'à 21 conteneurs virtuels VC2.

Chaque conteneur virtuel VC12 ou VC2 est inséré dans une unité d'affluent TU12 ou TU2. Du fait que les données du conteneur virtuel VC12 ou VC2 et l'unité d'affluent TU12 ou TU2 ne sont pas synchrones, le conteneur virtuel VC12 ou VC2 peut flotter au sein de cette unité d'affluent si bien qu'un pointeur est nécessaire pour indiquer son début dans l'unité d'affluent TU. Ce pointeur est transporté par les octets V1 et V2 situés dans le sur-débit de l'unité d'affluent TU et pointe le premier octet du conteneur virtuel correspondant, c'est-à-dire l'octet V5 du sur-débit POH, comme cela est visible à la Fig. 1a. On notera que ce pointeur est défini pour une multitrame et qu'il peut être modifié lorsque le débit de l'unité d'affluent est décalé en plus ou en moins par rapport au débit du conteneur virtuel VC2 ou VC12. Des mécanismes de justifications positive ou négative sont également prévus pour tenir compte également de ces décalages de fréquences.

Chaque unité d'affluent TU est enfin insérée dans quatre conteneurs virtuels VC4 de quatre trames STM-1 successives. Chaque unité d'affluent TU est synchrone du conteneur virtuel VC4 la contenant.

Aujourd'hui, un réseau SDH ne peut offrir qu'au maximum seulement cinq débits utiles de transport qui correspondent aux conteneurs virtuels utilisés suivants :
- conteneur virtuel de type VC4 : 150 Mbit/s,
- conteneur virtuel de type VC3 : 48 Mbit/s,
- conteneur virtuel de type VC2 : 7 Mbit/s,
- conteneur virtuel de type VC12 : 2 Mbit/s,
- conteneur virtuel de type VC11: 1,5 Mbit/s.

Le transport de flux de débits intermédiaires a pour conséquence non seulement un mauvais remplissage des conteneurs virtuels et donc des conduits synchrones SDH mais aussi, du fait de la structure de multiplexage SDH, une perte de ressources sous la forme de conteneurs virtuels VC11, VC12, VC2 ou VC3 qui pourraient être disponibles par trame STM-1 pour d'autres flux adaptés à ces conteneurs virtuels.

Ainsi, non seulement les débits, par exemple, compris entre 50 et 100 Mbits/s sont transportés par un conteneur virtuel VC4 avec un taux de remplissage faible compris entre 33 % et 66 %, mais aussi, il est impossible d'utiliser pour d'autres flux les conteneurs virtuels VC d'ordre inférieur (VC11, VC12, VC2 ou VC3) rendus indisponibles dans la trame STM-1 qui est occupée entièrement par ce conteneur virtuel VC4 mal rempli.

Pour résoudre ce problème, la Recommandation G.707 prévoit la concaténation virtuelle d'unités TU-2 dans un conteneur VC-4 de niveau supérieur. Cette concaténation permet le transport de données dans m x unités TU-2 sans utiliser l'indication de concaténation dans les octets de pointeur.

Il est mentionné encore que le traitement du pointeur dans un équipement intermédiaire peut provoquer des différences dans le retard des signaux de conteneurs VC2 individuels virtuellement concaténés.

On connaît également, pour résoudre en partie ce problème de remplissage des conteneurs SDH, d'après le document de brevet EP-A-814 580, un multiplexeur hybride qui comprend des premiers moyens de réception pour recevoir le contenu d'un conteneur SDH de grande capacité, des moyens de concentration pour réduire le nombre de cellules ATM du conteneur reçu en éliminant les cellules vides qui y étaient contenues, des moyens de génération pour engendrer un conteneur SDH de plus faible capacité avec les cellules ATM retenues et d'éventuelles cellules vides de bourrage, des moyens de multiplexage pour réaliser le multiplexage synchrone SDH des conteneurs de plus faibles capacités et des moyens de transmission pour transmettre le conteneur SDH ainsi engendré.

Dans la présente invention, la concaténation dont il est question est toujours virtuelle. Ce dernier terme ne sera pas systématiquement utilisé pour la désigner, mais on comprendra qu'il sera néanmoins sous-entendu.

Cependant, aucun mécanisme n'est prévu par la Recommandation G.707 pour récupérer les conteneurs virtuels concaténés si ceux-ci font l'objet au cours de leur transport dans le réseau SDH, soit d'un changement de position dans la trame, soit de mouvements de leurs pointeurs d'unité TU2 ou TU12.

De même, aucun mécanisme n'est prévu pour remettre en phase les conteneurs concaténés lorsque ceux-ci font l'objet de déphasages importants supérieurs à plus d'une multitrame.

De plus, aucun mécanisme n'est prévu par la Recommandation G.707 pour projeter le débit de service dans des conteneurs et ensuite les concaténer ceci afin d'ajuster le débit de service à un débit réservé.

Le but de la présente invention est de proposer un système d'accès à réseau synchrone qui permette de résoudre ces problèmes et, en particulier, de proposer un tel système pour transmettre des données sur un réseau synchrone du type SDH de manière à utiliser au mieux la capacité des trames aussi bien pour le flux de données source que pour les autres flux des équipements intermédiaires du réseau SDH.

Un tel système de transmission de données par un réseau synchrone est du type qui comprend au moins un équipement émetteur et au moins un équipement récepteur, lesdites données étant fournies à l'entrée dudit équipement émetteur pour être insérées dans des conteneurs virtuels concaténés qui sont eux-mêmes insérés dans des trames synchrones pour être transmis audit équipement récepteur.

Selon une caractéristique de la présente invention, ledit équipement émetteur comporte une unité de mesure du débit du flux de données entrant et une unité de paramétrage qui déduit de la mesure effectuée par ladite unité de mesure le nombre total de conteneurs virtuels d'ordre inférieur à virtuellement concaténer pour transporter ledit flux de données dans lesdites trames, l'en-tête de chaque conteneur concaténé portant un message donnant le nombre total de conteneurs concaténés ainsi que le numéro d'ordre dudit conteneur parmi lesdits conteneurs concaténés, ledit équipement récepteur ne délivrant que les conteneurs portant ledit message et, ce, dans l'ordre donné par ledit message.

Selon une autre caractéristique de l'invention, ledit réseau est du type SDH conformément à la Recommandation G.707 et, pour un conteneur virtuel concaténé donné, ledit message est constitué des seize octets d'en-tête J2 successivement transmis dans seize multitrames successives.

Selon une autre caractéristique de l'invention, ledit équipement récepteur fonctionne selon au moins deux phases distinctes, une phase d'apprentissage où, au moyen du message porté par chacun desdits conteneurs, ledit équipement récepteur repère dans les trames reçues la position de chaque conteneur concaténé reçu et une phase de fonctionnement normal où, sur la base de chaque position ainsi déterminée, il délivre lesdits conteneurs concaténés à une unité de recouvrement desdites données.

Selon une autre caractéristique de l'invention, ledit équipement émetteur fonctionne selon au moins deux phases distinctes, une phase d'initialisation pendant laquelle l'unité de mesure mesure le débit du flux entrant et l'unité de paramétrage en déduit le nombre total de conteneurs virtuels à réserver pour le transport desdites données du flux entrant puis une phase de fonctionnement normal pendant laquelle lesdites données sont insérées dans lesdits conteneurs virtuels réservés, ledit équipement émetteur sortant de ladite phase de fonctionnement normal pour entrer dans ladite phase d'initialisation lorsque ladite unité de mesure indique que ledit débit mesuré est supérieur au débit maximum que peut offrir le nombre total de conteneurs concaténés réservés.

Selon une autre caractéristique de l'invention, ledit équipement émetteur comprend une unité de formation de conteneurs pour former lesdits conteneurs concaténés au moyen, d'une part, des données utiles du flux entrant et, d'autre part, si celles-ci ne sont pas disponibles en quantité suffisante au moment considéré, au moyen de données de bourrage nécessaires pour saturer le débit offert par lesdits conteneurs virtuels.

Selon une autre caractéristique de l'invention, dans un premier mode de réalisation, chaque sous-conteneur comporte en plus de son en-tête un octet de longueur qui est représentatif de la quantité de données utiles et/ou de la quantité de bourrage dans sa charge utile.

Selon une autre caractéristique de l'invention et dans un autre mode réalisation, ledit équipement émetteur comporte une mémoire tampon qui est alimentée par ledit flux entrant et qui est prévue pour délivrer, à sa demande, des blocs de données utiles à ladite unité de formation, et une unité de contrôle qui, soit commande la délivrance par ladite mémoire tampon d'un ou plusieurs blocs de données utiles lorsque ceux-ci sont disponibles dans ladite mémoire tampon, soit délivre des blocs de données de bourrage lorsque la quantité de données utiles dans ladite mémoire tampon est inférieure à la quantité de données d'un bloc. Chacun desdits blocs de données a par exemple la taille d'un sous-conteneur virtuel de manière à remplir sa charge utile, chaque sous-conteneur virtuel étant, soit d'un type où il contient des données utiles, soit d'un type où il contient des données de bourrage.

Selon une autre caractéristique de l'invention, chaque sous-conteneur comprend en plus de son en-tête, un octet représentatif du type des données qu'il contient.

Selon une autre caractéristique de l'invention, ledit octet de type a sept bits qui expriment le mot 1010101 lorsque ledit sous-conteneur transporte des données utiles et le mot binaire 0101010 lorsqu'il transporte des données de bourrage, ledit octet étant reconnu au niveau de l'équipement récepteur par calcul de la distance de Hamming entre les sept bits de l'octet reçu et la valeur 1010101 et par comparaison de cette distance avec le chiffre quatre, le sous-conteneur reçu étant du type où il contient des données utiles si ladite distance est inférieure à quatre et étant du type où il contient des données de bourrage si cette distance est supérieure ou égale à quatre.

Selon une autre caractéristique de l'invention, ladite mémoire tampon délivre les valeurs respectives d'un pointeur haut et d'un pointeur bas, ladite unité de contrôle délivrant des blocs de données de bourrage lorsque la différence entre ces deux valeurs est inférieure à la taille d'un sous-conteneur et, ce jusqu'à ce que ladite différence redevienne supérieure à la taille d'un sous-conteneur, ladite unité de contrôle commandant alors la délivrance, par la mémoire tampon, des blocs de données qu'elle contient.

Selon une autre caractéristique de l'invention, ledit flux entrant est un flux de cellules ATM et chacun desdits blocs de données a la taille d'une ou plusieurs cellules ATM

Selon une autre caractéristique de l'invention, lesdits blocs de données sont rangés dans une multitrame en remplissant consécutivement les conteneurs réservés.

Selon une autre caractéristique de l'invention, lesdits blocs de données sont rangés dans une multitrame en répartissant à la suite les uns des autres lesdits blocs sur les conteneurs réservés.

Selon une autre caractéristique de l'invention, ledit équipement récepteur est pourvu en sa sortie d'une mémoire tampon qui est alimentée par les données recouvrées extraites desdits conteneurs virtuels concaténés reçus et, ce, au rythme de l'extraction desdites données, et qui est lue à un rythme régulier.

Selon une autre caractéristique de l'invention, ledit message porte également un identificateur dudit équipement émetteur.

La présente invention concerne également un procédé de transmission de données par un réseau synchrone du type où lesdites données sont insérées dans des conteneurs virtuels qui sont eux-mêmes insérés dans des trames synchrones pour être transmis.

Selon une caractéristique de la présente invention, ledit procédé de transmission consiste à mesurer le débit du flux de données entrant, à déduire du résultat de ladite mesure le nombre total de conteneurs virtuels à concaténer pour transporter ledit flux de données dans lesdites trames, et à pourvoir chacun desdits conteneurs à concaténer d'un message donnant le nombre total de conteneurs concaténés ainsi que le numéro d'ordre dudit conteneur parmi lesdits conteneurs concaténés.

Selon une autre caractéristique de l'invention, ledit réseau est du type SDH conformément à la Recommandation G.707 et ledit procédé est caractérisé en ce que, pour un conteneur virtuel concaténé donné, ledit message est constitué des seize octets d'en-tête J2 successivement transmis dans seize multitrames successives.

Selon une autre caractéristique de l'invention, à la réception d'une trame contenant des conteneurs concaténés, deux étapes distinctes sont mises en oeuvre : une étape d'apprentissage où, au moyen du message porté par chacun desdits conteneurs, la position de chaque conteneur concaténé reçu est récupérée dans les trames reçues et une étape de fonctionnement normal où, sur la base de chaque position ainsi déterminée, lesdits conteneurs concaténés sont délivrés pour que lesdites données puissent être recouvrées.

Selon une autre caractéristique de l'invention, il consiste à remettre en phase, à la réception, les conteneurs réservés en analysant le décalage des octets constituant le message porté par chacun d'eux.

Selon une autre caractéristique de l'invention, à l'émission, deux phases distinctes sont mises en oeuvre : une phase d'initialisation pendant laquelle est effectuée une mesure du débit du flux entrant et est déduit le nombre total de conteneurs virtuels à réserver pour le transport desdites données du flux entrant, et une phase de fonctionnement normal pendant laquelle lesdites données du flux entrant sont insérées dans lesdits conteneurs virtuels réservés, ladite phase de fonctionnement normal étant abandonnée pour ladite phase d'initialisation lorsque ledit débit mesuré est supérieur au débit maximum que peut offrir le nombre total de conteneurs concaténés réservés.

Selon une autre caractéristique de l'invention, il consiste à utiliser, pour former lesdits conteneurs concaténés, d'une part, des données utiles du flux entrant et, d'autre part, si celles-ci ne sont pas disponibles en quantité suffisante au moment considéré, des données de bourrage nécessaires pour saturer le débit offert par lesdits conteneurs virtuels.

Selon une autre caractéristique de l'invention, ledit message porte également un identificateur dudit équipement émetteur.

La présente invention concerne également une trame synchrone pour le transport de flux de données, lesdites données étant insérées dans des conteneurs virtuels qui sont eux-mêmes insérés dans ladite trame synchrone.

Selon une autre caractéristique de l'invention, chacun desdits conteneurs qui sont concaténés entre eux sont porteurs d'un message donnant le nombre total de conteneurs concaténés ainsi que le numéro d'ordre dudit conteneur parmi lesdits conteneurs concaténés.

Selon une autre caractéristique de l'invention, ladite trame est du type SDH conformément à la Recommandation G.707 et elle est de plus caractérisée en ce que, pour un conteneur virtuel concaténé donné, ledit message est constitué des seize octets d'en-tête J2 successivement transmis dans seize multitrames successives.

Selon une autre caractéristique de l'invention, chaque sous-conteneur comporte en sus de son en-tête un octet de type qui indique s'il porte, dans sa charge utile, des données utiles ou des données de bourrage.

Selon une autre caractéristique de l'invention, ledit octet de type a sept bits qui expriment le mot 1010101 lorsque ledit sous-conteneur transporte des données utiles et le mot binaire 0101010 lorsqu'il transporte des données de bourrage.

Selon une autre caractéristique de l'invention, chaque sous-conteneur comporte en sus de son en-tête un octet de longueur qui est représentatif de la quantité de données utiles et/ou de la quantité de bourrage dans sa charge utile.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un diagramme montrant la structure des trames d'un réseau synchrone du type SDH auquel la présente invention peut être appliquée,
La Fig. 2 est un diagramme montrant la structure des conteneurs virtuels qui sont concaténés selon la présente invention,
La Fig. 3 est un schéma synoptique d'un système de transmission de données par un réseau synchrone selon la présente invention,
Les Figs. 4a et 4b est un diagramme illustrant le remplissage des conteneurs virtuels concaténés selon deux modes distincts,
La Fig. 5 est un diagramme illustrant la structure du message porté par chacun des conteneurs virtuels concaténés, et
Les Figs. 6a à 6c sont des diagrammes illustrant le remplissage des conteneurs virtuels au moyen des données utiles et des données de bourrage selon deux modes de réalisation de l'invention.

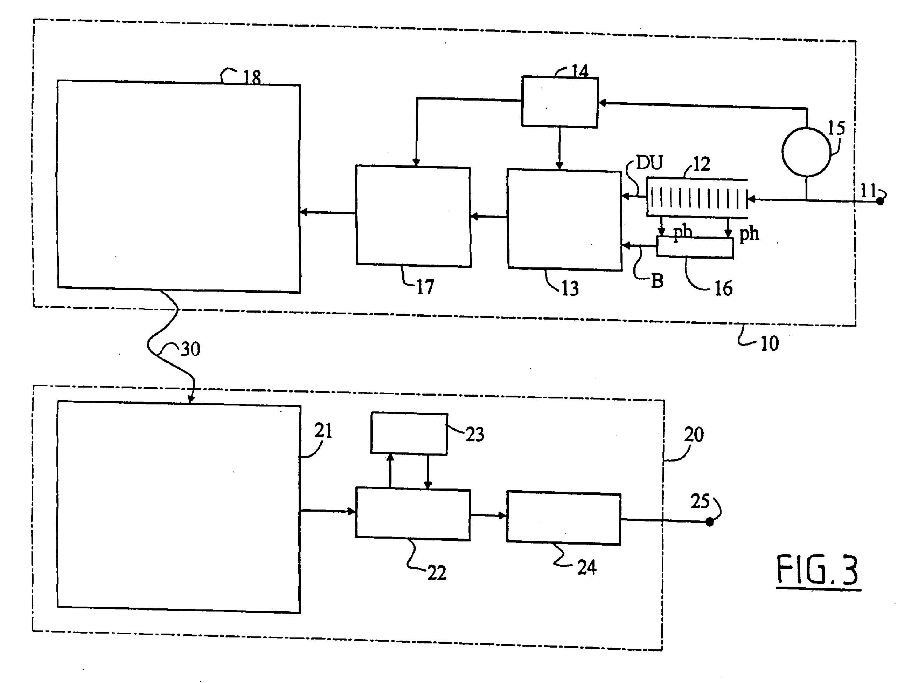

On va considérer, en relation avec la Fig. 3, un équipement émetteur 10 en communication avec un récepteur 20 par un réseau synchrone 30, par exemple du type SDH (Synchronous Digital Hierarchy) fondé sur la Recommandation G.707 de l'UIT-T rappelée ci-dessus ou du type SONET.

L'équipement émetteur 10 comporte une entrée de service 11 par laquelle sont entrées les données à transmettre. Dans le cadre de la présente invention, ces données peuvent se présenter sous divers formats comme par exemple : des cellules ATM, des signaux numériques à large bande du type binaire NRZ, des données au format PDH G.703, des signaux audionumériques au format AES/UER ou des signaux audiovisuels compressés au format MPEG2-TS, trame de données IEEE 802.3 ou Ethernet, etc.

Ces données sont fournies à une mémoire tampon 12 du type dénommé dans le domaine de technique FIFO (First Input, First Output : premier entré, premier sorti). Cette mémoire tampon 12 délivre les données utiles DU qu'elle a mémorisées à une unité 13 de formation de conteneurs et ce, à la demande de ladite unité 13. Une unité de paramétrage 14 est pilotée, de la manière explicitée ci-dessous, par une unité 15 de mesure du débit du flux de données à l'entrée 11 de l'équipement émetteur.

La mémoire tampon 12 délivre également les valeurs respectives d'un pointeur haut ph et d'un pointeur bas pb représentatifs de son niveau de remplissage. Ces valeurs de pointeurs sont fournies à une unité de contrôle de débit 16 qui délivre, à l'unité de formation de conteneurs 13, de la manière qui sera explicitée ci-dessous en fonction des niveaux de remplissage de la mémoire tampon 12, des données de bourrage B.

L'unité 13 a pour fonction de former, au moyen des données utiles DU délivrées à sa propre demande par la mémoire tampon 12 et des données de bourrage B fournies par l'unité de contrôle de débit 16, des conteneurs C2 ou C12. Elle reçoit de l'unité de paramétrage 14 divers paramètres et, en particulier, le nombre de conteneurs N à concaténer et le type, C2 ou C12 à considérer.

L'unité 13 délivre les conteneurs C2 ou C12 qu'elle forme à une unité de formation de conteneurs virtuels 17 prévue pour ajouter des octets de sur-débit V5, J2, N2 et K4 aux conteneurs C2 ou C12 et ainsi former des conteneurs virtuels VC2 ou VC12. L'unité 17 reçoit de l'unité de paramétrage 14 un octet J2 qui constitue l'un desdits octets de surdébit.

Les conteneurs virtuels ainsi formés sont délivrés à une unité d'émission 18 qui, de la manière expliquée ci-dessus, les insère dans des conteneurs VC4, qui projette lesdits conteneurs VC4 dans des trames STM-1 et transmet lesdites trames STM-1, via le réseau SDH 30, au récepteur 20.

On rappelle que les conteneurs VC2 et VC12 sont définis sur une multitrame définie comme étant la succession de quatre trames STM-1 alors que le conteneur virtuel VC4 est lui défini sur une trame STM-1.

Le récepteur 20 reçoit lesdites trames par une unité de réception 21 laquelle, d'une manière connue en soi, après interprétation des pointeurs PTR (qui ne sont pas nécessairement les mêmes que ceux qui ont été déterminés par l'équipement émetteur 10 notamment du fait du passage desdites trames dans le réseau SDH 30), récupère les conteneurs VC4, puis les unités d'affluent TU2 ou TU12 que lesdits conteneurs contiennent et, après interprétation des pointeurs V1 et V2 correspondants, délivre des conteneurs virtuels VC2 ou VC12 à une unité de recouvrement de conteneurs 22 prévue pour recouvrir les conteneurs C2 ou C12 correspondants. L'unité 22 est pilotée par une unité d'analyse de sur-débit 23 qui analyse les octets de sur-débit V5, J2, N2 et K4 et lui permet d'extraire les seuls conteneurs C2 ou C12 issus de la concaténation comme cela sera expliqué ci-après. Enfin, les conteneurs C2 ou C12 fournis par l'unité 22 sont délivrés à une unité de recouvrement de données 24 qui, d'une part, recouvre les données initiales et, d'autre part, récupère le rythme et rend régulier le débit desdites données qui sont ensuite délivrées sur une sortie de service 25.

L'unité 24 est par exemple constituée d'une mémoire tampon du type FIFO dont l'écriture des données est synchrone des conteneurs C2 ou C12 délivrés par l'unité 22 et est donc de ce fait sporadique et dont la lecture des données est en revanche asservie sur son niveau de remplissage rendant le débit de sortie des données régulier.

On va maintenant décrire le fonctionnement de l'équipement émetteur 10. Il fonctionne en deux phases distinctes : une phase d'initialisation et une phase de fonctionnement courant.

La phase d'initialisation est mise en oeuvre à la mise en route de l'équipement émetteur 10. Là, les différentes cartes constituant l'équipement sont configurées et les éventuelles anomalies et alarmes pouvant empêcher la mise en route sont détectées.

Pendant cette phase, l'unité de mesure de débit 15 mesure le débit du flux de données entrant et transmet le résultat de cette mesure à l'unité de paramétrage 14 qui en déduit alors le nombre N de conteneurs virtuels VC12 ou VC2 qu'il est nécessaire de réserver pour transmettre les données de service issues de l'entrée 11 et qui mémorise cette valeur N. Par exemple, le nombre N de conteneurs VC12 ou VC2 à réserver est égal au nombre entier juste supérieur au rapport du débit ainsi mesuré Dₘₑₛ par le débit de données utiles D_{VC12} ou D_{VC2} correspondant à un conteneur VC 12 ou VC2, ceci en tenant en compte des différents sur-débits nécessaires.

Par exemple, si le débit mesuré Dₘₑₛ est égal à 25 Mbits/s et que les conteneurs virtuels considérés sont des conteneurs VC2 dont le débit D_{VC2} est égal à 6 784 Kbits/s, le nombre N sera égal à 4.

On comprendra que dans le cadre de la Recommandation G.707 rappelée ci-dessus, le nombre N sera au plus de 63 pour des conteneurs VC12 offrant un débit de données utiles D_{VC12} et de 21 pour les conteneurs VC2 offrant un débit de données utiles D_{VC2}. On verra par la suite les valeurs exactes des débits Dv_{C12} et D_{VC2}.

Si le nombre de conteneurs à réserver est égal au nombre N déjà utilisé au cours d'une précédente phase de fonctionnement (le nombre N est mémorisé dans l'unité de paramétrage 14), aucune modification n'est nécessaire et l'équipement passe directement dans la phase de fonctionnement subséquente.

On notera que le fait que le nombre N soit mémorisé permet de redémarrer sans intervention humaine l'équipement dans son dernier état après qu'une coupure secteur soit intervenue.

Si le nombre de conteneurs à réserver est supérieur au nombre N précédemment mémorisé, sa nouvelle valeur N est mémorisée à la place de la précédente pour pouvoir être prise en compte. Une confirmation de l'utilisateur peut être demandée afin de permettre d'augmenter artificiellement en cours de transmission le nombre de conteneurs virtuels VC12 ou VC2 concaténés en prévoyance d'une augmentation du débit d'entrée.

Le nombre N ainsi que le type de conteneurs utilisés C2 ou C12 sont mémorisés par l'unité 14 pour être délivrés, pendant la phase de fonctionnement subséquente, à l'unité de formation de conteneurs 13.

Pendant cette phase, l'équipement émetteur 10 fonctionne de la manière suivante.

A chaque instant, l'unité de mesure 15 mesure le débit Dₘₑₛ du flux de données sur l'entrée 11. L'unité de paramétrage 14 vérifie si le débit Dₘₑₛ de données ainsi mesuré peut être transporté par les N conteneurs VC12 ou VC2 réservés pendant la phase d'initialisation.

Si tel n'est pas le cas, une alarme est activée et l'équipement émetteur sort de la phase de fonctionnement pour entrer dans une nouvelle phase d'initialisation où sera alors calculé un nouveau nombre N de conteneurs virtuels VC12 ou VC2 à réserver.

On notera que l'opérateur peut à tout instant interrompre l'émission. L'équipement sort alors de la phase de fonctionnement pour reprendre plus tard une phase d'initialisation.

L'unité de formation des conteneurs 13, sur la base des valeurs des paramètres qui lui sont transmises par l'unité de paramétrage 14, notamment la valeur N et le type de conteneurs virtuels utilisés VC12 ou VC2, demande à la mémoire tampon 12 de lui fournir des données utiles DU sous la forme d'un ou de plusieurs blocs d'octets, ou si celles-ci ne sont pas disponibles en quantité souhaitée, de lui fournir, via l'unité de contrôle de débit 16, des données de bourrage B qui servent alors à saturer le débit offert par les N conteneurs réservés.

On notera que la dimension des blocs d'octets dépend du format des données à insérer dans le conteneur. Par exemple, selon l'invention, s'il s'agit de données binaires de type NRZ, un bloc correspondra aux octets qui sont nécessaires pour remplir la charge utile d'un sous-conteneur S-VC12 ou S-VC2, c'est-à-dire respectivement 33 ou 105 octets. S'il s'agit de données sous la forme de cellules ATM, un bloc correspondra à une cellule ATM, c'est-à-dire à 53 octets.

L'unité 13 forme alors, à partir de ces données utiles DU et de bourrage B, des conteneurs C12 ou C2.

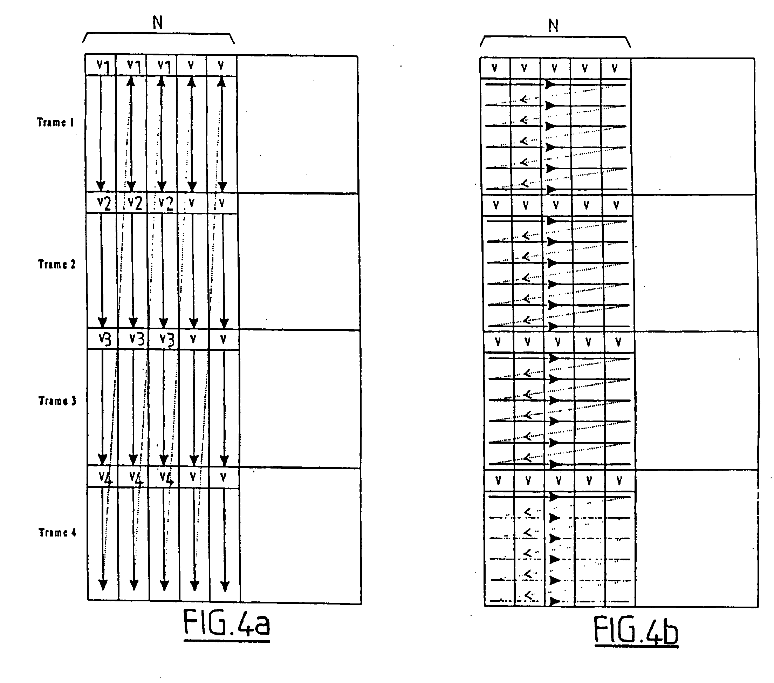

Les blocs de données peuvent être rangés dans une multitrame soit en remplissant les N conteneurs consécutivement (voir Fig. 4a), soit en répartissant les blocs de données les uns après les autres sur les N conteneurs réservés (voir Fig. 4b).

Dans le premier cas (Fig. 4a), les blocs sont insérés conteneur après conteneur si bien qu'il faut attendre le remplissage complet des N conteneurs avant de pouvoir transmettre la multitrame. La latence du processus est alors de quatre trames soit, pour une durée de trame de 125 µs, une latence de 500 µs.

Dans le deuxième cas (Fig. 4b), le remplissage des N conteneurs réservés s'effectue trame par trame. Chaque bloc de données est réparti sur les octets des N conteneurs réservés. Une trame peut être transmise dès son remplissage, si bien que la latence du processus n'est que d'une trame, soit, pour une durée de trame de 125 µs, une durée de 125 µs.

L'unité 17 adjoint à chaque sous-conteneur un octet d'en-tête qui est soit l'octet V5, soit l'octet J2, soit l'octet N2, soit l'octet K4 conformément à la Recommandation G.707 et forme ainsi les conteneurs virtuels VC2 ou VC12 selon le cas.

L'unité 17 numérote de façon continue chaque conteneur utilisé et positionne ainsi son octet J2 de manière à former un message dit identificateur J2, construit à partir d'un certain nombre d'octets J2 présents dans le sur-débit de conduit POH (Path overhead) du même nombre de multitrames successives. Le nombre d'octets J2 formant ledit identificateur J2 est avantageusement de 16 pour pouvoir être conforme à la Recommandation G.707 qui prévoit la formation d'un tel message sans cependant en définir le contenu. De même, de manière plus générale, le format de l'identificateur J2 est conforme à la Recommandation G. 707.

Selon la présente invention, l'identificateur J2 forme un message spécifique aux équipements utilisés afin de pouvoir identifier avec fiabilité les conteneurs VC concaténés appartenant à un équipement donné parmi l'ensemble des conteneurs virtuels reçus dans la multitrame. Il permet également de vérifier le séquencement des conteneurs concaténés et l'intégrité de la concaténation.

Ceci permet de résoudre les problèmes de repérage et d'extraction des conteneurs virtuels concaténés reçus, problèmes liés au fait que, dans le réseau SDH 30, les valeurs des pointeurs V1 et V2 affectés à ces conteneurs virtuels ne sont pas obligatoirement conservées du fait de leur changement de position. De plus, l'ordre des conteneurs peut ne pas être conservé non plus et leur position au sein de la trame peut être modifiée dans le réseau entre un équipement émetteur et un équipement récepteur, par exemple à un équipement de brassage, de multiplexage, etc., du réseau SDH.

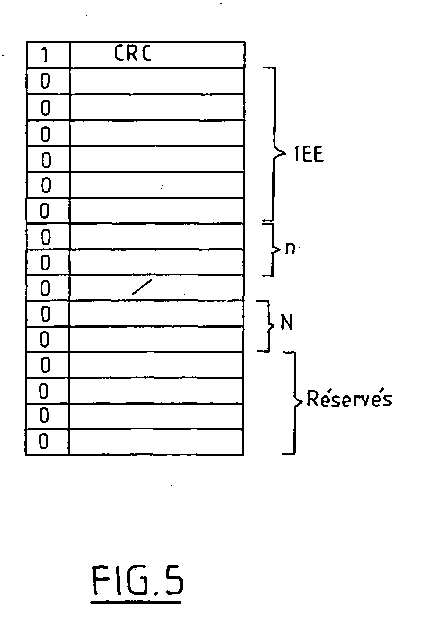

Comme on peut le voir à la Fig. 5, le message porté par les octets J2 est essentiellement constitué de trois champs : un identificateur de l'équipement émetteur IEE, le numéro d'ordre n du conteneur concerné et le nombre total N de conteneurs qui ont été concaténés par l'équipement émetteur identifié.

Ces champs sont par exemple exprimés en clair en code dit ASCII, le premier sur six octets, le second sur deux octets et le troisième également sur deux octets. Un séparateur peut être prévu entre le numéro d'ordre n et le nombre total N de conteneurs réservés par multitrames.

De plus, un octet, par exemple le premier, de identificateur J2 peut, conformément à la Recommandation G.707, contenir un code de vérification par redondance cyclique (Cyclic Redundancy Check = CRC) associé à identificateur J2 précédemment reçu et les autres octets sont destinés au message proprement dit.

L'identificateur J2 contient également des octets réservés à d'autres applications (ici au nombre de 4).

Les conteneurs virtuels VC12 ou VC2 formés par l'unité 17 sont transmis à l'unité 18 qui les projette dans des unités TU12 ou TU2, lesquelles sont insérées dans les conteneurs virtuels VC4 de trames successives pour être ensuite transportées par le réseau SDH 30 dans des multitrames formées de quatre trames STM-1.

Quant à l'équipement récepteur 20, il fonctionne de la manière suivante. Les trames STM-1 reçues du réseau SDH 30 sont analysées dans l'unité 21 qui délivre alors, à partir des conteneurs VC4 correspondants, des conteneurs virtuels VC12 ou VC2. Pour tenir compte des différences dans les valeurs des pointeurs entre conteneurs virtuels concaténés dues au changement de leur position lors de leur transmission dans le réseau SDH, il peut être nécessaire de mémoriser au moins quatre trames STM-1 consécutives, voire plusieurs multitrames.

Cela peut être notamment le cas lorsque deux conteneurs concaténés subissent dans le réseau SDH un déphasage important dépassant une multitrame. L'identificateur J2 va permettre de les remettre en phase tant que ce déphasage n'excède pas 8 multitrames. En effet, si deux conteneurs concaténés sont déphasés de P multitrames, à un moment donné, l'un délivrera le K^{ième} octet J2 du message J2 et l'autre délivrera le (K + P)^{ième} octet J2. On comprendra qu'à l'analyse des octets J2 reçus (qui est faite pendant la phase d'apprentissage du récepteur 20 (voir ci-après)), il est possible de déduire le déphase P entre ces deux conteneurs.

L'octet J2 comprenant 16 octets, le déphasage maximum que l'on pourra ainsi déterminer est de 8 multitrames. Par exemple, un déphasage de P (P > 8) multitrames pourra être interprété comme un déphasage positif de P multitrames ou comme un déphasage négatif de (16-P) multitrames.

On comprendra qu'il peut être alors nécessaire de mémoriser jusqu'à huit multitrames pour récupérer ces déphasages.

L'unité 22 analyse les en-têtes de ces conteneurs virtuels VC2 ou VC12 et, en particulier, extrait l'octet J2 qu'elle fournit alors à unité 23. L'unité 22, de la manière exposée ci-dessous, délivre alors les conteneurs virtuels C2 ou C12 qui avaient été concaténés à une unité 24 qui les désassemble de manière à recouvrer le flux de données initiales sur la sortie 25.

Plus précisément, l'équipement récepteur 20 fonctionne selon essentiellement trois phases distinctes qui sont, la phase d'initialisation, la phase d'apprentissage et la phase de fonctionnement.

La phase d'initialisation est mise en oeuvre à la mise en route de l'équipement de réception. Les différentes cartes qui constituent l'équipement sont configurées et les éventuelles anomalies et alarmes pouvant empêcher le fonctionnement correct du système sont détectées. Une fois cette phase d'initialisation effectuée, l'équipement passe dans la phase d'apprentissage.

Durant la phase d'apprentissage, les octets J2 délivrés par l'unité 22 sont lus par l'unité 23 qui reconstitue et interprète l'identificateur J2 porté par les octets de sur-débit J2 (au nombre par exemple de seize) de multitrames successives. L'unité 23 délivre alors la valeur du nombre N de conteneurs qui ont été concaténés à l'équipement émetteur considéré ainsi que la valeur du numéro d'ordre n du conteneur considéré. Ces deux valeurs sont enregistrées par l'unité 23 et délivrées à l'unité 22 qui va ainsi pouvoir entrer dans sa troisième phase de fonctionnement. A l'issu de cette phase, l'équipement récepteur 20 est synchronisé sur l'équipement émetteur 10.

C'est durant cette période d'apprentissage qu'est déterminé le déphasage entre conteneurs concaténés.

On notera que les conteneurs qui ne concernent pas l'équipement émetteur considéré sont rejetés sans interprétation de leur octet J2.

Par ailleurs, on notera que, durant cette phase d'apprentissage, le recouvrement du flux de données est désactivé.

Lorsqu'il possède la position dans la multitrame des N conteneurs utilisés, l'équipement récepteur passe à la phase de fonctionnement.

Durant la phase de fonctionnement, il y a d'abord réception par l'unité 21 de l'équipement récepteur 20 des trames issues du conduit de transmission 30.

Les traitements liés à la couche de transport SDH entre l'interface physique et la couche S2 ou S12 sont décrits dans le modèle fonctionnel de la Recommandation mentionnée ci-dessus G.707. A chaque multitrame reçue, les pointeurs des conteneurs situés dans le sur-débit V1 et V2 des unités d'affluent TU12 ou TU2 sont sauvegardés dans une mémoire. Il y a ensuite l'extraction des conteneurs VC12 ou des conteneurs VC2 des unités d'affluents TU12 ou TU2.

Les conteneurs virtuels VC12 ou VC2 reçus sont conformes à la Recommandation G.707. L'unité 23 traite les octets de leur sur-débit V5, J2, N2 et K4 et reconstitue le message transporté par l'identificateur J2. Les conteneurs virtuels qui ont été reçus mais qui n'ont pas été reconnus comme figurant parmi ceux qui sont pointés par l'identificateur J2 déterminé pendant la phase de synchronisation sont rejetés. Pour les autres, les blocs de données utiles contenus dans les conteneurs C12 ou C2 sont extraits par l'unité 22 à partir des conteneurs virtuels VC12 ou VC2 délivrés par l'unité 21 et sont ensuite délivrés à l'unité 24 qui délivre alors le flux de données recouvrées sur la sortie de service 25.

Le message sur 16 octets transporté par l'identificateur J2 est interprété par l'unité 23 même en dehors de la phase d'apprentissage. Il permet de vérifier que la configuration des conteneurs concaténés dans la multitrame n'a pas changé. Au cas où elle viendrait à varier, l'équipement repasserait en phase d'apprentissage.

Lorsque le débit de données de service à l'entrée 11 est inférieur au débit qui a été réservé au moyen des N conteneurs VC2 ou VC12, il est nécessaire, afin de saturer le débit du conduit, d'ajouter aux données utiles DU des données dites de "bourrage" B, c'est-à-dire qui ne sont pas représentatives d'informations utiles.

L'introduction des données de bourrage B dans un conteneur C2 ou C12 peut se faire, soit directement dans le conteneur lui-même, soit au niveau de la couche ATM en considérant des cellules de bourrage qui sont ensuite introduites dans le conteneur comme toute autre cellule ATM.

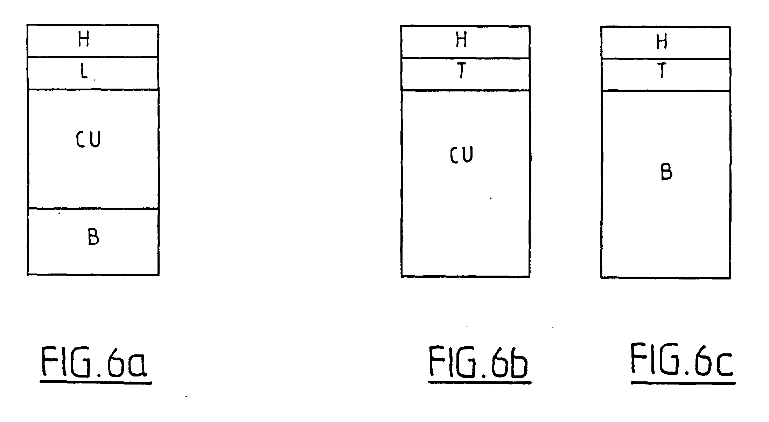

En ce qui concerne l'introduction directe, les données de bourrage B peuvent être transmises mélangées au niveau octets avec des données utiles DU au sein d'un même sous-conteneur virtuel. La configuration d'un sous-conteneur virtuel est alors celle qui est représentée à la Fig. 6a. Ce sous-conteneur virtuel comporte une charge utile CU dans laquelle sont insérées les données utiles DU et un bourrage B dans lequel sont insérées les données de bourrage. Il comporte encore un octet d'en-tête H (qui est l'un des octets V5, J2, N2 ou K4) suivi d'un octet L qui indique la longueur, par exemple exprimée en nombre d'octets, de la charge utile CU.

On rappelle qu'un tel sous-conteneur virtuel comprend 35 ou 107 octets. En conséquence, compte tenu de l'octet d'en-tête H et de l'octet L, la charge utile CU aura une longueur maximale de 33 ou 105 octets. Le débit maximal D_{VC2} assuré par un conteneur virtuel VC2 (quatre sous-conteneurs virtuels S-VC2) sera alors par multitrame de 6 720 Kbits/s et le débit D_{VC12} pour un conteneur virtuel VC12 (quatre sous-conteneurs virtuels S-VC12) de 2 112 Kbits/s.

Toujours en ce qui concerne l'introduction directe, les données de bourrage peuvent également être transmises en étant rassemblées dans des sous-conteneurs spécifiques qui sont alors mélangés avec des sous-conteneurs de données utiles.

A la Fig. 6b, on a représenté un sous-conteneur de données utiles alors qu'à la Fig. 6c, on a représenté un sous-conteneur de bourrage. On constate que chacun contient une indication d'appartenance à l'un ou l'autre type qui est par exemple contenue dans un octet spécifique T du sous-conteneur virtuel considéré. Cette information qui est binaire présente l'avantage d'être simple à protéger contre d'éventuelles erreurs.

L'octet T a ses sept premiers bits qui expriment le mot binaire 1010101 lorsque le sous-conteneur transporte des données utiles DU et le mot binaire 0101010 lorsqu'il transporte des données de bourrage B. Ainsi, au niveau de l'équipement récepteur, l'octet sera reconnu par calcul de la distance de Hamming entre les sept premiers bits de l'octet reçu et la valeur 1010101. Si cette distance est inférieure à quatre, c'est que l'octet T a la valeur 1010101 et que le conteneur reçu transporte des données utiles DU. Par contre, si cette distance est supérieure ou égale à quatre, c'est que l'octet T a la valeur 0101010 et que le conteneur reçu transporte des données de bourrage B.

Comme précédemment, la charge utile CU aura une longueur maximale de 33 ou 105 octets et le débit maximum D_{VC2} assuré par un conteneur virtuel VC2 (quatre sous-conteneurs virtuels S-VC2) sera alors par multitrame de 6 720 Kbits/s et le débit D_{VC12} pour un conteneur virtuel VC12 (quatre sous-conteneurs virtuels S-VC12) de 2 112 Kbits/s.

On comprendra qu'alors, si N est le nombre de conteneurs réservés sur le lien SDH, le débit total réservé sera de N x 2 112 Kbits/s pour des conteneurs virtuels VC12 et de N x 6 720 Kbits/s pour des conteneurs virtuels VC2.

L'unité 22 est pilotée par l'unité 23 qui analyse les octets de surdébits H (V5, J2, N2, K4), mais également les octets L ou T. Les seuls blocs de données utiles DU sont alors délivrés à l'unité de recouvrement 24.

Dans le cas où l'on effectue l'insertion des données de bourrage au niveau de la couche physique ATM et non au niveau des conteneurs, du point de vue de la couche SDH, toutes les données transportées sont des données utiles sans distinction.

La couche ATM supporte ce type de données de bourrage. En effet, les cellules ATM sont structurées en un en-tête de 5 octets et une charge utile sur 48 octets. On notera qu'en AAL1, la charge utile est réduite à 47 octets. L'en-tête permet de définir le type de charge transportée dans la cellule. La valeur suivante stockée dans les 4 premiers octets de l'en-tête indique qu'il s'agit d'une cellule de bourrage :

| Octet 1 | Octet 2 | Octet 3 | Octet 4 |
|---|---|---|---|
| 0000 0000 | 0000 0000 | 0000 0000 | 0000 0001 |

Afin d'ajuster au mieux le débit du flux d'entrée avec celui des N conteneurs réservés ou concaténés dans la trame SDH, le nombre N de conteneurs étant fixé durant la phase d'apprentissage, le contrôleur de débit automatique de la couche ATM insère dans chaque conteneur, soit des cellules de bourrage, soit des cellules de données utiles.

La taille d'un conteneur virtuel est de 140 (4x 35) ou 428 (4 x 107) octets en fonction du type de conteneur traité par l'équipement, VC12-xc ou VC2-xc, dont 4 octets de sur-débit POH (V5, J2, N2 ou K4), soit au total 136 ou 424 octets de charge utile qui seront utilisés pour transporter les cellules ATM qui, elles, comportent 53 octets. Aucun alignement entre le conteneur et les cellules ATM n'est réalisé si bien que les cellules ATM peuvent être réparties sur deux conteneurs consécutifs.

On comprendra qu'un conteneur virtuel VC12 transporte 4 x 34 octets de données utiles par multitrame, ce qui correspond à un débit D_{VC12} de 2 176 Kbit/s par conteneur C12. Quant à un conteneur virtuel VC2, il transporte 4 x 106 octets de données utiles par multitrame, ce qui correspond à un débit D_{VC2} de 6 784 Kbit/s par conteneur C2.

Dans le cas du traitement du bourrage par introduction directe des données de bourrage, le processus de contrôle automatique de débit mis en oeuvre par l'unité est le suivant.

Si la différence des valeurs respectivement portées par le pointeur haut ph et le pointeur bas pb de la mémoire tampon 12 est supérieure à la taille d'un sous-conteneur, soit 33 ou 105 octets, l'unité de contrôle automatique 16 extrait de la mémoire tampon 12 les données utiles DU nécessaires pour remplir un ou plusieurs conteneurs et ce, jusqu'à ce que la différence des valeurs ph et pb portées par lesdits pointeurs devienne inférieure à la taille d'un sous-conteneur.

Si cette différence est inférieure à la taille d'un sous-conteneur, alors l'unité de contrôle automatique 16 délivre des données de bourrage B destinées à être insérées dans des sous-conteneurs, comme cela a été précédemment décrit et ce, jusqu'à ce que ladite différence redevienne supérieure à la taille d'un sous-conteneur.

Le processus mis en oeuvre par l'unité de contrôle automatique de débit 16 est maintenant décrit dans le cas du traitement du bourrage au niveau de la couche ATM. Si la différence des valeurs respectivement portées par les deux pointeurs ph et pb de la mémoire tampon 12 est supérieure à la taille d'une cellule ATM, soit 53 octets (ou 47 octets dans le cas d'AAL1), l'unité de contrôle automatique de débit 16 extrait de la mémoire tampon 12 une ou plusieurs cellules de données et ce, jusqu'à ce que la différence entre les deux valeurs de pointeur ph et pb soit inférieure à la taille d'une cellule. Si la différence des valeurs respectivement portées par les deux pointeurs ph et pb de la mémoire tampon 12 est inférieure à la taille d'une cellule, alors l'unité de contrôle automatique 16 insère des cellules de bourrage.

Dans le cas où le bourrage B est inséré au niveau de la couche physique ATM, les cellules de bourrage sont rejetées par l'unité 22 pour n'avoir sur la sortie 25 que des cellules ATM de données utiles.

## Revendications

1. Système de transmission de données par un réseau synchrone, ledit système comprenant au moins un équipement émetteur (10) et au moins un équipement récepteur (20), lesdites données étant fournies à l'entrée dudit équipement émetteur (10) pour être insérées dans des conteneurs virtuels concaténés qui sont eux-mêmes insérés dans des trames synchrones pour être transmis audit équipement récepteur (20), **caractérisé en ce que** ledit équipement émetteur (10) comporte une unité de mesure du débit du flux de données entrant (15) et une unité de paramétrage (14) adaptée à déduire de la mesure effectuée par ladite unité de mesure (15) le nombre total de conteneurs virtuels d'ordre inférieur à virtuellement concaténer pour transporter ledit flux de données dans lesdites trames, l'en-tête de chaque conteneur concaténé portant un message donnant le nombre total de conteneurs concaténés ainsi que le numéro d'ordre dudit conteneur parmi lesdits conteneurs concaténés, ledit équipement récepteur (20) étant prévu pour ne délivrer que les conteneurs portant ledit message et, ce, dans l'ordre donné par ledit message.

2. Système de transmission de données selon la revendication 1, ledit réseau étant du type SDH conformément à la Recommandation G.707, **caractérisé en ce que**, pour un conteneur virtuel concaténé donné, ledit message est constitué des seize octets d'en-tête J2 successivement transmis dans seize multitrames successives.

3. Système de transmission de données selon la revendication 1 ou 2, **caractérisé en ce que** ledit équipement récepteur (20) est prévu pour fonctionner selon au moins deux phases distinctes, une phase d'apprentissage où, au moyen du message porté par chacun desdits conteneurs, ledit équipement récepteur (20) est prévu pour repérer dans les trames reçues la position de chaque conteneur concaténé reçu et une phase de fonctionnement normal où, sur la base de chaque position ainsi déterminée, il est prévu pour délivrer lesdits conteneurs concaténés à une unité de recouvrement (24) desdites données.

4. Système de transmission de données selon une des revendications précédentes, **caractérisé en ce que** ledit équipement émetteur (10) est prévu pour fonctionner selon au moins deux phases distinctes, une phase d'initialisation pendant laquelle l'unité de mesure (15) mesure le débit du flux entrant et l'unité de paramétrage (14) en déduit le nombre total de conteneurs virtuels à réserver dans la trame synchrone pour les concaténer afin de transporter lesdites données du flux entrant puis une phase de fonctionnement normal pendant laquelle lesdites données sont insérées dans lesdits conteneurs virtuels concaténés réservés, ledit équipement émetteur (10) étant prévu pour sortir de ladite phase de fonctionnement normal, et pour entrer dans ladite phase d'initialisation lorsque ladite unité de mesure indique (15) que ledit débit mesuré est supérieur au débit maximum que peut offrir le nombre total de conteneurs concaténés réservés.

5. Système de transmission de données selon une des revendications précédentes, **caractérisé en ce que** ledit équipement émetteur (10) comprend une unité de formation de conteneurs (13) pour former lesdits conteneurs concaténés au moyen, d'une part, des données utiles du flux entrant et, d'autre part, si celles-ci ne sont pas disponibles en quantité suffisante au moment considéré, au moyen de données de bourrage nécessaires pour saturer le débit offert par lesdits conteneurs virtuels.

6. Système de transmission de données selon la revendication 5, **caractérisé en ce que** chaque sous-conteneur comporte en plus de son en-tête un octet de longueur qui est représentatif de la quantité de données utiles et/ou de la quantité de bourrage dans sa charge utile.

7. Système de transmission de données selon la revendication 5, **caractérisé en ce que** ledit équipement émetteur (10) comporte une mémoire tampon (12) qui est alimentée par ledit flux entrant et qui est prévue pour délivrer, à sa demande, des blocs de données utiles à ladite unité de formation, et une unité de contrôle (16) qui, soit commande la délivrance par ladite mémoire tampon (12) d'un ou plusieurs blocs de données utiles lorsque ceux-ci sont disponibles dans ladite mémoire tampon (12), soit délivre des blocs de données de bourrage lorsque la quantité de données utiles dans ladite mémoire tampon est inférieure à la quantité de données d'un bloc.

8. Système de transmission de données selon la revendication 7, **caractérisé en ce que** chacun desdits blocs de données a la taille d'un sous-conteneur virtuel de manière à remplir sa charge utile, chaque sous-conteneur virtuel étant, soit d'un type où il contient des données utiles, soit d'un type où il contient des données de bourrage.

9. Système de transmission de données selon la revendication 8, **caractérisé en ce que** chaque sous-conteneur comprend en plus de son en-tête, un octet représentatif du type des données qu'il contient.

10. Système de transmission de données selon la revendication 9, **caractérisé en ce que** ledit octet de type a sept bits qui expriment le mot 1010101 lorsque ledit sous-conteneur transporte des données utiles et le mot binaire 0101010 lorsqu'il transporte des données de bourrage, ledit octet étant reconnu au niveau de l'équipement récepteur par calcul de la distance de Hamming entre les sept bits de l'octet reçu et la valeur 1010101 et par comparaison de cette distance avec le chiffre quatre, le sous-conteneur reçu étant du type où il contient des données utiles si ladite distance est inférieure à quatre et étant du type où il contient des données de bourrage si cette distance est supérieure ou égale à quatre.

11. Système de transmission de données selon la revendication 7 à 10, **caractérisé en ce que** ladite mémoire tampon (12) délivre les valeurs respectives d'un pointeur haut et d'un pointeur bas, ladite unité de contrôle délivrant des blocs de données de bourrage lorsque la différence entre ces deux valeurs est inférieure à la taille d'un sous-conteneur et, ce jusqu'à ce que ladite différence redevienne supérieure à la taille d'un sous-conteneur, ladite unité de contrôle (16) commandant alors la délivrance, par la mémoire tampon, des blocs de données qu'elle contient.

12. Système de transmission de données selon la revendication 7, ledit flux entrant étant un flux de cellules ATM, **caractérisé en ce que** chacun desdits blocs de données a la taille d'une ou plusieurs cellules ATM

13. Système de transmission de données selon une des revendications 6 à 12, **caractérisé en ce que** lesdits blocs de données sont rangés dans une multitrame en remplissant consécutivement les conteneurs réservés.

14. Système de transmission de données selon une des revendications 6 à 12, **caractérisé en ce que** lesdits blocs de données sont rangés dans une multitrame en répartissant à la suite les uns des autres lesdits blocs sur les conteneurs réservés.

15. Système de transmission de données selon une des revendications précédentes, **caractérisé en ce que** ledit équipement récepteur (20) est pourvu en sa sortie d'une mémoire tampon qui est alimentée par les données recouvrées extraites desdits conteneurs virtuels concaténés reçus et, ce, au rythme de l'extraction desdites données, et qui est lue à un rythme régulier.

16. Système de transmission de données selon une des revendications précédentes, **caractérisé en ce que** ledit message porte également un identificateur dudit équipement émetteur (10).

17. Procédé de transmission de données par un réseau synchrone, lesdites données étant insérées dans des conteneurs virtuels qui sont eux-mêmes insérés dans des trames synchrones pour être transmis, **caractérisé en ce qu'**il consiste à mesurer le débit du flux de données entrant, à déduire du résultat de ladite mesure le nombre total de conteneurs virtuels à concaténer pour transporter ledit flux de données dans lesdites trames, et à pourvoir chacun desdits conteneurs à concaténer d'un message donnant le nombre total de conteneurs concaténés ainsi que le numéro d'ordre dudit conteneur parmi lesdits conteneurs concaténés.

18. Procédé de transmission de données selon la revendication 17, ledit réseau étant du type SDH conformément à la Recommandation G.707, **caractérisé en ce que**, pour un conteneur virtuel concaténé donné, ledit message est constitué des seize octets d'en-tête J2 successivement transmis dans seize multitrames successives.

19. Procédé de transmission de données selon la revendication 17 ou 18, **caractérisé en ce qu'**à la réception d'une trame contenant des conteneurs concaténés, deux étapes distinctes sont mises en oeuvre : une étape d'apprentissage où, au moyen du message porté par chacun desdits conteneurs, la position de chaque conteneur concaténé reçu est récupérée dans les trames reçues et une étape de fonctionnement normal où, sur la base de chaque position ainsi déterminée, lesdits conteneurs concaténés sont délivrés pour que lesdites données puissent être recouvrées.

20. Procédé de transmission de données selon la revendication 19, **caractérisé en ce qu'**il consiste à remettre en phase, à la réception, les conteneurs concaténés déphasés de plusieurs multitrames en analysant le décalage des octets constituant le message porté par chacun d'eux.

21. Procédé de transmission de données selon une des revendications 17 à 20, **caractérisé en ce qu'**à l'émission, deux phases distinctes sont mises en oeuvre : une phase d'initialisation pendant laquelle est effectuée une mesure du débit du flux entrant et est déduit le nombre total de conteneurs virtuels à réserver pour le transport desdites données du flux entrant, et une phase de fonctionnement normal pendant laquelle lesdites données du flux entrant sont insérées dans lesdits conteneurs virtuels réservés, ladite phase de fonctionnement normal étant abandonnée pour ladite phase d'initialisation lorsque ledit débit mesuré est supérieur au débit maximum que peut offrir le nombre total de conteneurs concaténés réservés.

22. Procédé de transmission de données selon une des revendications 17 à 21, **caractérisé en ce qu'**il consiste à utiliser, pour former lesdits conteneurs concaténés, d'une part, des données utiles du flux entrant et, d'autre part, si celles-ci ne sont pas disponibles en quantité suffisante au moment considéré, des données de bourrage nécessaires pour saturer le débit offert par lesdits conteneurs virtuels.

23. Procédé de transmission de données selon une des revendications 17 à 22, **caractérisé en ce que** ledit message porte également un identificateur dudit équipement émetteur.

24. Trame synchrone pour le transport de flux de données, lesdites données étant insérées dans des conteneurs virtuels qui sont eux-mêmes insérés dans ladite trame synchrone, **caractérisée en ce que** chacun desdits conteneurs qui sont concaténés entre eux sont porteurs d'un message donnant le nombre total de conteneurs concaténés ainsi que le numéro d'ordre dudit conteneur parmi lesdits conteneurs concaténés.

25. Trame selon la revendication 24, du type SDH conformément à la Recommandation G.707, **caractérisée en ce que**, pour un conteneur virtuel concaténé donné, ledit message est constitué des seize octets d'en-tête J2 successivement transmis dans seize multitrames successives.

26. Trame selon la revendication 24 ou 25, **caractérisée en ce que** chaque sous-conteneur comporte en sus de son en-tête un octet de type qui indique s'il porte, dans sa charge utile, des données utiles ou des données de bourrage.

27. Trame selon la revendication 26, **caractérisée en ce que** ledit octet de type a sept bits qui expriment le mot 1010101 lorsque ledit sous-conteneur transporte des données utiles et le mot binaire 0101010 lorsqu'il transporte des données de bourrage.

28. Trame selon la revendication 24 ou 25, **caractérisée en ce que** chaque sous-conteneur comporte en sus de son en-tête un octet de longueur qui est représentatif de la quantité de données utiles et/ou de la quantité de bourrage dans sa charge utile.

## Claims

1. System for transmitting data via a synchronous network, the said system comprising at least one transmitter apparatus (10) and at least one receiver apparatus (20), the said data being supplied to the input of the said transmitter apparatus (10) in order to be inserted into concatenated virtual containers which are themselves inserted into synchronous frames in order to be transmitted to the said receiver apparatus (20), **characterised in that** the said transmitter apparatus (10) comprises a unit for measuring the rate of the incoming datastream (15) and a parameterisation unit (14) adapted to derive, from the measurement carried out by the said measurement unit (15), the total number of lower order virtual containers to be virtually concatenated in order to transport the said datastream in the said frames, the header of each concatenated container carrying a message giving the total number of concatenated containers as well as the order number of the said container among the said concatenated containers, the said receiver apparatus (20) being intended to deliver only the containers carrying the said message, and to do so in the order given by the said message.

2. Data transmission system according to Claim 1, the said network being of the SDH type according to Recommendation G.707, **characterised in that** for a given concatenated virtual container, the said message consists of sixteen header bytes J2 transmitted successively in sixteen successive multiframes.

3. Data transmission system according to Claim 1 or 2, **characterised in that** the said receiver apparatus (20) is intended to operate according to at least two distinct phases: a learning phase in which, by means of the message carried by each of the said containers, the said receiver apparatus (20) is intended to identify the position of each received concatenated container in the received frames, and a normal operating phase in which, on the basis of each position determined in this way, it is intended to deliver the said concatenated containers to a unit (24) for recovering the said data.

4. Data transmission system according to one of the preceding claims, **characterised in that** the said transmitter apparatus (10) is intended to operate according to at least two distinct phases: an initialisation phase during which the measurement unit (15) measures the rate of the incoming stream and a parameterisation unit (14) derives therefrom the total number of virtual containers to be reserved in a synchronous frame in order to concatenate them for transporting the said data of the incoming stream, then a normal operating phase during which the said data are inserted into the said reserved concatenated virtual containers, the transmitter apparatus (10) being intended to exit the said normal operating phase and enter the said initialisation phase when the said measurement unit (15) indicates that the said measured rate is higher than the maximum rate which can be offered by the total number of reserved concatenated containers.

5. Data transmission system according to one of the preceding claims, **characterised in that** the said transmitter apparatus (10) comprises a container formation unit (13) for forming the said concatenated containers on, the one hand by means of the useful data of the incoming stream and on the other hand, if a sufficient quantity of these is not available at the time in question, by means of padding data required in order to saturate the rate offered by the said virtual containers.

6. Data transmission system according to Claim 5, **characterised in that** in addition to its header, each subcontainer comprises a length byte which represents the quantity of useful data and/or the quantity of padding data in its payload.

7. Data transmission system according to Claim 5, **characterised in that** the said transmitter apparatus (10) comprises a buffer memory (12) which is supplied with the said incoming stream and is intended to deliver useful data blocks to the said formation unit at its request, and a control unit (16) which either instructs the said buffer memory (12) to deliver one or more useful data blocks when they are available in the said buffer memory (12), or delivers padding data blocks when the quantity of useful data in the said buffer memory is less than the data quantity of a block.

8. Data transmission system according to Claim 7, **characterised in that** each of the said data blocks has the size of a virtual subcontainer so as to fill its payload, each virtual subcontainer being either of a type such that it contains useful data or of a type such that it contains padding data.

9. Data transmission system according to Claim 8, **characterised in that** in addition to its header, each subcontainer comprises a length byte which represents the type of data which it contains.

10. Data transmission system according to Claim 9, **characterised in that** the said type byte has seven bits which express the word 1010101 when the said subcontainer transports useful data and the binary word 0101010 when it transports padding data, the said byte being recognized in the receiver apparatus by calculating the Hamming distance between the seven bits of the received byte and the value 1010101 and by comparing this distance with the number four, the received subcontainer being of the type such that it contains useful data if the said distance is less than four and being of the type such that it contains padding data if this distance is greater than or equal to four.

11. Data transmission system according to Claims 7 to 10, **characterised in that** the said buffer memory (12) delivers the respective values of a high pointer and a low pointer, the said control unit delivering padding data blocks when the difference between these two values is less than the size of a subcontainer, which it does until the said difference again becomes greater than the size of a subcontainer, the said control unit (16) then instructing the buffer memory to deliver the data blocks which it contains.

12. Data transmission system according to Claim 7, the incoming stream being a stream of ATM cells, **characterised in that** each of the said data blocks has a size of one or more ATM cells.

13. Data transmission system according to one of Claims 6 to 12, **characterised in that** the said data blocks are placed in a multiframe by consecutively filling the reserved containers.

14. Data transmission system according to one of Claims 6 to 12, **characterised in that** the said data blocks are placed in a multiframe by distributing the said blocks one after the other over the reserved containers.

15. Data transmission system according to one of the preceding claims, **characterised in that** the said receiver apparatus (20) is provided at its output with a buffer memory, which is supplied with the recovered data extracted from the said received concatenated virtual containers, this being done in time with the extraction of the said data, and which is read at a regular frequency.

16. Data transmission system according to one of the preceding claims, **characterised in that** the said message also carries an identifier of the said transmitter apparatus (10).

17. Method for transmitting data via a synchronous network, the said data being inserted into virtual containers which are themselves inserted into synchronous frames in order to be transmitted, **characterised in that** it consists in measuring the rate of the incoming datastream, in deriving from the result of the said measurement the total number of lower order virtual containers to be virtually concatenated in order to transport the said datastream in the said frames, and in providing each of the said containers to be concatenated with a message giving the total number of concatenated containers as well as the order number of the said container among the said concatenated containers.

18. Data transmission method according to Claim 17, the said network being of the SDH type according to Recommendation G.707, **characterised in that** for a given concatenated virtual container, the said message consists of sixteen header bytes J2 transmitted successively in sixteen successive multiframes.

19. Data transmission method according to Claim 17 or 18, **characterised in that** two distinct steps are carried out when a frame containing concatenated containers is received: a learning phase in which the position of each received concatenated container is acquired in the received frames by means of the message carried by each of the said containers, and a normal operating phase in which the said concatenated containers are delivered on the basis of each position determined in this way, so that the said data can be recovered.

20. Data transmission method according to Claim 19, **characterised in that** it consists in the concatenated containers phase-shifted by a plurality of multiframes being returned into phase on reception, by analysing the offset of the bytes constituting the message carried by each of them.

21. Data transmission method according to one of Claims 17 to 20, **characterised in that** two distinct steps are carried out on transmission: an initialisation phase during which a measurement of the rate of the incoming stream is carried out and the total number of virtual containers to be reserved for transporting the said data of the incoming stream is derived therefrom, and a normal operating phase during which the said data of the incoming stream are inserted into the said reserved virtual containers, the said normal operating phase being abandoned in favour of the said initialisation phase when the said measured rate is higher than the maximum rate which can be offered by the total number of reserved concatenated containers.

22. Data transmission method according to one of Claims 17 to 21, **characterised in that** in order to form the said concatenated containers, it consists in using on the one hand useful data of the incoming stream and on the other hand, if a sufficient quantity of these is not available at the time in question, in using padding data required in order to saturate the rate offered by the said virtual containers.

23. Data transmission method according to one of Claims 17 to 22, **characterised in that** the said message also carries an identifier of the said transmitter apparatus.

24. Synchronous frame for transporting a datastream, the said data being inserted into virtual containers which are themselves inserted into the said synchronous frame, **characterised in that** each of the said containers which are concatenated with one another carries a message giving the total number of concatenated containers as well as the order number of the said container among the said concatenated containers.

25. Frame according to Claim 24, of the SDH type according to Recommendation G.707, **characterised in that** for a given concatenated virtual container, the said message consists of sixteen header bytes J2 transmitted successively in sixteen successive multiframes.

26. Frame according to Claim 24 or 25, **characterised in that** further to its header, each subcontainer comprises a type byte which indicates whether it carries useful data or padding data in its payload.

27. Frame according to Claim 26, **characterised in that** the said type byte has seven bits which express the word 1010101 when the said subcontainer transports useful data and the binary word 0101010 when it transports padding data.

28. Frame according to Claim 24 or 25, **characterised in that** further to its header, each subcontainer comprises a length byte which represents the quantity of useful data and/or the quantity of padding data in its payload.

## Patentansprüche

1. System zum Übertragen von Daten über ein Synchronnetz, wobei das besagte System mindestens eine Sendevorrichtung (10) und mindestens eine Empfangsvorrichtung (20) umfasst, wobei die besagten Daten am Eingang der besagten Sendevorrichtung (10) bereitgestellt werden, um in virtuelle, verkettete Behälter eingefügt zu werden, die selbst in synchrone Rahmen (C Frames) eingefügt werden, um an die besagte Empfangsvorrichtung (20) gesendet zu werden,
**dadurch gekennzeichnet, dass** die besagte Sendevorrichtung (10) eine Einheit zum Messen der eingehenden Datenflussrate (15) und eine Einheit zum Parametrieren (14) umfasst, wobei diese Einheit zum Parametrieren in der Lage ist, aus der von der besagten Messeinheit (15) durchgeführten Messung die Gesamtzahl von virtuellen Behältern unterer Ordnung abzuleiten, welche virtuell zu verketten sind, um den besagten Datenfluss in den besagten Rahmen zu befördern, wobei der Kopf eines jeden verketteten Behälters eine Meldung trägt, welche die Gesamtzahl von verketteten Behältern angibt, wobei die besagte Empfangsvorrichtung (20) dazu vorgesehen ist, nur die Behälter abzuliefern, welche die besagte Meldung tragen, und zwar in der von der besagten Meldung angegebenen Reihenfolge.

2. System zum Übertragen von Daten nach Anspruch 1, wobei das besagte Netz von der Art SDH in Übereinstimmung mit der Empfehlung G.707 ist,
**dadurch gekennzeichnet, dass** für einen gegebenen virtuellen verketteten Behälter die besagte Meldung aus sechzehn Kopfbytes J2 besteht, die nacheinander in sechzehn aufeinanderfolgender Mehrfachrahmen gesendet werden.

3. System zum Übertragen von Daten nach einem der Ansprüche 1 oder 2, **dadurch gekennzeichnet, dass** die besagte Empfangsvorrichtung (20) so ausgelegt ist, dass sie gemäß mindestens zwei unterschiedlicher Phasen funktioniert, eine Lernphase, in welcher die besagte Empfangsvorrichtung (20) mit Hilfe der von jedem der besagten Behälter getragenen Meldung dazu vorgesehen ist, die Position eines jeden verketteten Behälters in den empfangenen Rahmen zu erfassen, und eine normale Funktionsphase, in der die Empfangsvorrichtung dazu vorgesehen ist, auf der Grundlage einer jeden so festgestellten Position die besagten verketteten Behälter an eine Einheit zum Überlagern (24) der besagten Daten zu liefern.

4. System zum Übertragen von Daten nach einem der vorhergehenden Ansprüche, **dadurch gekennzeichnet, dass** die besagte Sendevorrichtung (10) so ausgelegt ist, dass sie gemäß mindestens zwei unterschiedlicher Phasen funktioniert, eine Initialisierungsphase, während der die Messeinheit (15) die einkommende Datenflussrate misst und die Einheit zum Parametrieren (14) daraus die Gesamtzahl virtueller Behälter ableitet, die im synchronen Rahmen reserviert werden müssen, um sie zu verketten und die besagten Daten des einkommenden Datenflusses zu befördern, und danach eine normale Funktionsphase, in deren Verlauf die besagten Daten in die besagten reservierten virtuellen verketteten Behälter eingefügt werden, wobei die besagte Sendevorrichtung (10) so ausgelegt ist, dass sie aus der besagten normalen Funktionsphase austritt und in die besagte Initialisierungsphase eintritt, wenn die besagte Messeinheit (15) anzeigt, dass die besagte gemessene Rate größer ist, als die maximale Rate, welche die Gesamtzahl der reservierten verketteten Behälter bereitstellen kann.

5. System zum Übertragen von Daten nach einem der vorhergehenden Ansprüche, **dadurch gekennzeichnet, dass** die besagte Sendevorrichtung (10) eine Einheit zum Bilden von Behältern (13) aufweist, um die besagten verketteten Behälter einerseits mit Hilfe der nützlichen Daten des einkommenden Datenflusses und andererseits, falls diese zum betrachteten Zeitpunkt nicht in ausreichender Menge verfügbar sind, mit Hilfe von Fülldaten zu bilden, die erforderlich sind, um die von den besagten virtuellen Behältern bereitgestellte Rate zu sättigen.

6. System zum Übertragen von Daten nach Anspruch 5, **dadurch gekennzeichnet, dass** jeder Unterbehälter neben seinem Kopf ein Längenbyte aufweist, das für die Menge der nützlichen Daten und/oder die Menge der Fülldaten in seiner nützlichen Ladung repräsentativ ist.

7. System zum Übertragen von Daten nach Anspruch 5, **dadurch gekennzeichnet, dass** die besagte Sendevorrichtung (10) einen Pufferspeicher (12) aufweist, der vom besagten einkommenden Datenfluss gespeist wird und vorgesehen ist, um bei Nachfrage seitens des Pufferspeichers, der besagten Einheit zum Bilden Blöcke nützlicher Daten zu liefern sowie eine Steuereinheit (16), die entweder das Liefern von einem nützlichen Datenblock oder von mehreren nützlichen Datenblöcke durch den besagten Pufferspeicher (12) steuert, wenn diese im besagten Pufferspeicher (12) verfügbar sind oder aber Blöcke von Fülldaten liefert, wenn die Menge der nützlichen Daten im besagten Pufferspeicher geringer als die in einem Block befindliche Datenmenge ist.

8. System zum Übertragen von Daten nach Anspruch 7, **dadurch gekennzeichnet, dass** jeder der besagten Datenblöcke die Größe eines virtuellen Unterbehälters hat, so dass er seine Nutzladung füllt, wobei jeder virtuelle Unterbehälter entweder von einer Art, bei der er nützliche Daten oder aber von einer Art ist, bei der er Fülldaten enthält.

9. System zum Übertragen von Daten nach Anspruch 8, **dadurch gekennzeichnet, dass** jeder Unterbehälter neben seinem Kopf ein Byte umfasst, das für die Art der von ihm enthaltenen Daten repräsentativ ist.

10. System zum Übertragen von Daten nach Anspruch 9, **dadurch gekennzeichnet, dass** das besagte Typenbyte sieben Bits umfasst, welche das Wort 1010101 ausdrücken, wenn der besagte Unterbehälter nützliche Daten befördert, und das Binärwort 0101010, wenn er Fülldaten befördert, wobei das besagte Byte auf der Ebene der Empfangsvorrichtung durch Berechnung des Hammingabstandes zwischen den sieben Bits des empfangenen Bytes und den Wert 1010101 und durch Vergleich dieses Abstandes mit der Ziffer vier erkannt wird, wobei der empfangene Unterbehälter von der Art ist, die nützliche Daten enthält, wenn der besagte Abstand kleiner als vier ist und von der Art ist, die Fülldaten enthält, wenn dieser Abstand größer oder gleich vier ist.

11. System zum Übertragen von Daten nach den Ansprüchen 7 bis 10, **dadurch gekennzeichnet, dass** der besagte Pufferspeicher (12) die entsprechenden Werte eines hohen und eines tiefen Zeigers liefert, wobei die besagte Steuereinheit Fülldatenblöcke liefert, wenn die Differenz zwischen diesen zwei Werten kleiner als die Größe eines Unterbehälters ist, und dies so lange bis die besagte Differenz wieder größer als die Größe eines Unterbehälters wird, wobei die besagte Steuereinheit (16) dann dem Pufferspeicher den Befehl zum Liefern der in ihm enthaltenen Datenblöcke erteilt.

12. System zum Übertragen von Daten nach Anspruch 7, wobei der besagte einkommende Datenfluss ein Fluss von ATM-Zellen ist, **dadurch gekennzeichnet, dass** jeder der besagten Datenblöcke die Größe einer ATM-Zelle oder mehrerer ATM-Zellen aufweist.

13. System zum Übertragen von Daten nach einem der Ansprüche 6 bis 12, **dadurch gekennzeichnet, dass** die besagten Datenblöcke in einem Mehrfachrahmen eingereiht werden, wobei die reservierten Behälter der Reihenfolge nach aufgefüllt werden.

14. System zum Übertragen von Daten nach einem der Ansprüche 6 bis 12, **dadurch gekennzeichnet, dass** die besagten Datenblöcke in einem Mehrfachrahmen eingereiht werden, wobei die besagten Blöcke nacheinander über die reservierten Behälter verteilt werden.

15. System zum Übertragen von Daten nach einem der vorhergehenden Ansprüche, **dadurch gekennzeichnet, dass** die besagte Empfangsvorrichtung (20) an ihrem Ausgang einen Pufferspeicher aufweist, welcher durch die wiedergewonnenen Daten gespeist wird, die aus den besagten empfangenen virtuellen verketteten Behältern im Rhythmus der Extraktion der besagten Daten extrahiert werden, wobei der Pufferspeicher mit regelmäßigen Rhythmus abgelesen wird.

16. System zum Übertragen von Daten nach einem der vorhergehenden Ansprüche, **dadurch gekennzeichnet, dass** die besagte Meldung ebenfalls ein Kennzeichen der besagten Sendevorrichtung (10) trägt.

17. Verfahren zum Übertragen von Daten über ein Synchronnetz, wobei die besagten Daten in virtuelle Behälter eingefügt werden, die selbst in synchrone Rahmen eingefügt werden, um gesendet zu werden, **dadurch gekennzeichnet, dass** es darin besteht, die einkommende Datenflussrate zu messen, vom Ergebnis der besagten Messung die Gesamtzahl der virtuellen Behälter abzuleiten, die verkettet werden müssen, um den besagten Datenfluss in den besagten Rahmen zu befördern und jedem der besagten zu verkettenden Behälter mit einer Meldung zu versehen, welche die Gesamtzahl der verketteten Behälter sowie die Ordnungszahl des besagten Behälters unter den besagten verketteten Behältern angibt.

18. Verfahren zum Übertragen von Daten nach Anspruch 17, wobei das besagte Netz von der Art SDH in Übereinstimmung mit der Empfehlung G.707 ist,
**dadurch gekennzeichnet, dass** für einen gegebenen virtuellen verketteten Behälter, die besagte Meldung aus sechzehn Kopfbytes J2 besteht, die nacheinander in sechzehn aufeinanderfolgender Mehrfachrahmen gesendet werden.

19. Verfahren zum Übertragen von Daten nach einem der Ansprüche 17 oder 18, **dadurch gekennzeichnet, dass** beim Empfang eines Rahmens, der verkettete Behälter enthält, zwei verschiedene Schritte zum Einsatz kommen: ein Lernschritt in welchem mit Hilfe der von jedem der besagten Behälter getragenen Meldung, die Position eines jeden empfangenen verketteten Behälters in den empfangenen Rahmen wiedergewonnen wird und ein normaler Funktionsschritt, in dem auf der Grundlage einer jeden so erfassten Position die besagten verketteten Behälter geliefert werden, um das Wiedergewinnen der besagten Daten zu ermöglichen.

20. Verfahren zum Übertragen von Daten nach Anspruch 19, **dadurch gekennzeichnet, dass** es darin besteht, die phasenverschobenen verketteten Behälter mehrerer Mehrfachrahmen beim Empfang wieder in Phase zu bringen, durch Analyse der Verschiebung zwischen den Bytes, welche die von jedem Behälter getragene Meldung bilden.

21. Verfahren zum Übertragen von Daten nach einem der Ansprüche 17 bis 20, **dadurch gekennzeichnet, dass** zwei verschiedene Phasen beim Senden zum Einsatz kommen: eine Initialisierungsphase, in deren Verlauf eine Messung der einkommenden Datenflussrate durchgeführt und die Gesamtzahl der zur Beförderung der besagten Daten des einkommenden Datenflusses zu reservierenden virtuellen Behältern abgeleitet wird sowie eine normale Funktionsphase, in deren Verlauf die besagten Daten des einkommenden Datenflusses in die besagten reservierten virtuellen Behälter eingefügt werden, wobei die besagte normale Funktionsphase zu Gunsten der besagten Initialisierungsphase verlassen wird, wenn die besagte gemessene Rate größer als die maximale Rate ist, welche die Gesamtzahl der reservierten verketteten Behälter bereitstellen kann.

22. Verfahren zum Übertragen von Daten nach einem der Ansprüche 17 bis 21, **dadurch gekennzeichnet, dass** sie zum Bilden der besagten verketteten Behälter einerseits die nützlichen Daten des einkommenden Datenflusses und andererseits, falls diese zum betrachteten Zeitpunkt nicht in ausreichender Menge verfügbar sind, die Fülldaten verwenden, die erforderlich sind, um die von den besagten virtuellen Behältern bereitgestellte Rate zu sättigen.

23. Verfahren zum Übertragen von Daten nach einem der Ansprüche 17 bis 22 **dadurch gekennzeichnet, dass** die besagte Meldung ebenfalls ein Kennzeichen der besagten Sendevorrichtung trägt.

24. Synchroner Rahmen für den Transport von Datenflüssen, wobei die besagten Daten in virtuelle Behälter eingefügt werden, die selbst in den besagten synchronen Rahmen eingefügt werden, **dadurch gekennzeichnet, dass** jeder der besagten, untereinander verketteten Rahmen eine Meldung trägt, welche die Gesamtzahl verketteter Behälter sowie die Ordnungszahl des besagten Behälters unter den besagten verketteten Behältern angibt.

25. Rahmen nach Anspruch 24, von der Art SDH in Übereinstimmung mit der Empfehlung G.707, **dadurch gekennzeichnet, dass** für einen gegebenen verketteten virtuellen Behälter, die besagte Meldung aus sechzehn Kopfbits J2 besteht, die nacheinander in sechzehn aufeinanderfolgende Mehrfachrahmen gesendet werden.

26. Rahmen nach einem der Ansprüche 24 oder 25, **dadurch gekennzeichnet, dass** jeder Unterbehälter neben seinem Kopf ein Typenbyte umfasst, das angibt, ob er in seiner nützlichen Ladung nützliche Daten oder Fülldaten trägt.

27. Rahmen nach Anspruch 16, **dadurch gekennzeichnet, dass** das besagte Typenbyte sieben Bits umfasst, die das Wort 1010101 ausdrücken, wenn der besagte Unterbehälter nützliche Daten, und das Binärwort 0101010, wenn er Fülldaten befördert.

28. Rahmen nach einem der Ansprüche 24 oder 25, **dadurch gekennzeichnet, dass** jeder Unterbehälter neben seinem Kopf ein Längenbyte umfasst, das für die Menge der nützlichen Daten und/oder für die Menge der Fülldaten in seiner Nutzladung repräsentativ ist.
